(19) Europäisches Patentamt
European Patent Office
Office européen des brevets

(11) **EP 4 121 928 B1**

(12) **EUROPEAN PATENT SPECIFICATION**

(45) Date of publication and mention
of the grant of the patent:
**29.04.2026 Bulletin 2026/18**

(21) Application number: **21731391.5**

(22) Date of filing: **23.04.2021**

(51) International Patent Classification (IPC):
*G06Q 20/40* (2012.01)    *G06Q 20/02* (2012.01)

(52) Cooperative Patent Classification (CPC):
**H04L 9/3247; G06Q 20/02; G06Q 20/4016;
H04L 9/3239; H04L 9/50;** G06Q 2220/00

(86) International application number:
**PCT/EP2021/060654**

(87) International publication number:
**WO 2021/239345 (02.12.2021 Gazette 2021/48)**

(54) **PROBABILISTIC MEMBERSHIP TEST FOR BLOCKCHAIN TRANSACTION OUTPUTS**

PROBABILISTISCHER MITGLIEDSCHAFTSTEST FÜR BLOCKCHAIN-TRANSAKTIONSAUSGÄNGE

TEST D'APPARTENANCE PROBABILISTE DE SORTIES DE TRANSACTION SUR CHAÎNE DE BLOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2020 GB 202007996**

(43) Date of publication of application:
**25.01.2023 Bulletin 2023/04**

(73) Proprietor: **nChain Licensing AG
6300 Zug (CH)**

(72) Inventors:
• PAGANI, Alessio
London W1W 8AP (GB)
• WRIGHT, Craig Steven
London W1W 8AP (GB)

(74) Representative: **Page White Farrer
Bedford House
21a John Street
London WC1N 2BF (GB)**

(56) References cited:
**WO-A1-2019/160128    CN-A- 110 704 438
JP-A- 2019 146 137**

**Description**

TECHNICAL FIELD

The present disclosure relates to a method for identifying double-spend attempts of blockchain transaction outputs, i.e. attempts to re-spend (or re-assign) a previously spent (or assigned) output of a blockchain transaction.

BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks up until one or more coinbase transactions. Coinbase transactions are discussed below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at a node, and the publication of blocks can be achieved through the publication of mere block headers.

The transactions in the blockchain are used to perform one or more of the following: to convey a digital asset (i.e. a number of digital tokens), to order a set of journal entries in a virtualised ledger or registry, to receive and process timestamp entries, and/or to time-order index pointers. A blockchain can also be exploited in order to layer additional functionality on top of the blockchain. Blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in detail below. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

WO2019/160128A1 and JP2019146137A each disclose a method for validating a transaction in a blockchain network. A first node receives a transaction, gives the received transaction as an input to a Bloom filter. The Bloom filter is generated on the basis of one or more multiple transactions included in a blockchain. When the Bloom filter returns true, the first node performs a search by using a transaction identifier of the to-be-validated transaction as a key, and determines the presence or absence thereof. When a search result of the dictionary is false, it is determined that a to-be-validated transaction is valid.

## SUMMARY

According to at least some blockchain protocols, when a blockchain node received a new transaction, that node is required to check that the unspent transaction outputs (UTXOs) referenced by the inputs of a new transaction have not been already been referenced by another transaction that has already been published in a block, or that is in the ordered set of validated but unpublished transactions (often referred to as the "mempool"). This aims to prevent double-spending.

Some users, especially those with limited computational resources, operate a lightweight client application (also referred to herein just as a "light" client) to send blockchain transactions to the blockchain network. Unlike blockchain nodes, light clients do not store the blockchain and do not keep an ordered set of validated but unpublished transactions.

A light client that wants to check the validity of a transaction (with high probability) should query one or several blockchain nodes to verify that a UTXO referenced by the transaction has not already been spent by another transaction. However, light clients may want to accept transactions without waiting until those transactions have been published in a block, and without having to query the blockchain nodes for each newly received transaction. "0-conf transactions", also called instant transactions, are transactions accepted (e.g. by a merchant in exchange for goods or services) as soon as they are received and without waiting for the transactions to be published in a block. The risk of accepting a 0-conf transaction is that a malicious user could double-spend the same transaction, causing a loss to the merchant.

There is therefore a need for a party (such as a user operating a light client application) to be able to identify whether a new transaction is attempting to double-spend transaction outputs that have already been spent or otherwise assigned, without having to communicate with one or several blockchain nodes each time a new transaction is received by that party.

According to one aspect disclosed herein, there is provided a computer-implemented method of identifying a double-spend attempt of a blockchain transaction output, wherein the method is performed by a transmitting entity and comprises: generating a first probabilistic filter, wherein the first probabilistic filter encodes a respective identifier of each of a first plurality of spent blockchain transaction outputs available to the transmitting entity; and making the first probabilistic filter available to a receiving entity.

The transmitting entity (e.g. a blockchain node) populates a probabilistic filter with identifiers of previously spent blockchain outputs, e.g. outputs that have been spent by transactions in an ordered set of unpublished transactions maintained by that node, or in a published block of the blockchain (e.g. the last six blocks of the blockchain). A probabilistic filter (e.g. a Bloom filter or Cuckoo filter) is a probabilistic data structure that is used to test whether an element is a member of a set. A characteristic of probabilistic filters is that false positives are possible, but false negatives are not. That is, a probabilistic filter can be used to determine whether an element is definitely not in the set, or whether an element may be in the set. By making the probabilistic filter available to a receiving entity (e.g. a light client), the receiving entity can check whether a transaction that references one or more outputs of previous transactions is either definitely not a double-spend attempt, or whether it may be a double-spend attempt.

Making a filter available to the receiving entity may include transmitting the filter directly to the receiving entity, publishing the filter (e.g. on a website), or broadcasting the filter to many different receiving entities.

The receiving entity may be also be a blockchain node. A first blockchain node may generate a probabilistic filter containing identifiers of transaction outputs spent by transactions within its ordered set of unpublished transactions. The first blockchain node may then share that filter with one or several other blockchain nodes. Those blockchain nodes may use the received filter to check whether the transaction outputs of a newly received transaction have already been spent in a transaction in the ordered set of unpublished transactions maintained by the first blockchain node.

According to another aspect disclosed herein, there is provided a computer-implemented method of identifying a double-spend attempt of a blockchain transaction output, wherein the method is performing by a receiving entity and comprises: obtaining a first probabilistic filter from a transmitting entity, wherein the first probabilistic filter encodes a respective identifier of each of a first plurality of spent blockchain transaction outputs available to the transmitting entity; obtaining an indication of one or more blockchain transaction outputs; and determining whether the one or more blockchain transaction outputs are double-spend attempts based on whether a respective identifier of the one or more blockchain transaction outputs is present in the first probabilistic filter.

The present invention improves the security of merchants or other parties that use light clients to accept 0-conf transaction. Security is improved by identifying and preventing possible double-spending attacks. Light clients can be offline for most of the time and only need to download a small amount of data from blockchain nodes before accepting a new 0-conf transaction, thus improving data storage. In addition, a party that identities a double-spend attempt using the present invention can report fraudulent and dishonest users.

Moreover, this technique can also be used to enhance the security of blockchain nodes and defend them from denial-of-service attacks. For example, a device operating a light wallet (e.g. a vending machine) may use a simplified payment verification (SPV) method to accept payments. Without the use of probabilistic filters, the light wallet must check every incoming transaction with a set of blockchain nodes. In doing so, a malevolent user could submit several double-spend transactions (which are valid, following the SPV rules). The light wallet sends all the transactions to the blockchain nodes. When the blockchain nodes receive too many requests, they may crash or ban the light wallet (which then cannot accept new, legitimate payments). There is no cost for the attacker as it is sending double-spends that will be rejected. However, if instead the light wallet used a probabilistic filter, the light wallet can check double-spends locally and then reject them without flooding the blockchain nodes with invalid transactions. Therefore probabilistic filters not only improve the safety of light wallets, they also "protect" blockchain nodes.

BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3 schematically illustrates an example of a double-spending attempt due to non-synchronized mempools,

Figure 4 schematically illustrates an example of a of double-spending attempt due to a temporary chain fork,

Figure 5 is a schematic block diagram of an example system for implementing embodiments of the present invention,

Figure 6 schematically illustrates how probabilistic filters can be utilized to allow fast checking of multiple nodes in order to prevent double-spending,

Figure 7 schematically illustrates an example of how a new transaction received by a node is inserted into a probabilistic filter,

Figure 8 schematically illustrates an example of initializing a new filter each time a new block is found,

Figure 9 schematically illustrates an centralized local server that maintains probabilistic filters for verifying transactions received at connected devices, and

Figure 10 illustrates an example flow of actions performed by a client application for identifying double-spend attempts.

DETAILED DESCRIPTION OF EMBODIMENTS

EXAMPLE SYSTEM OVERVIEW

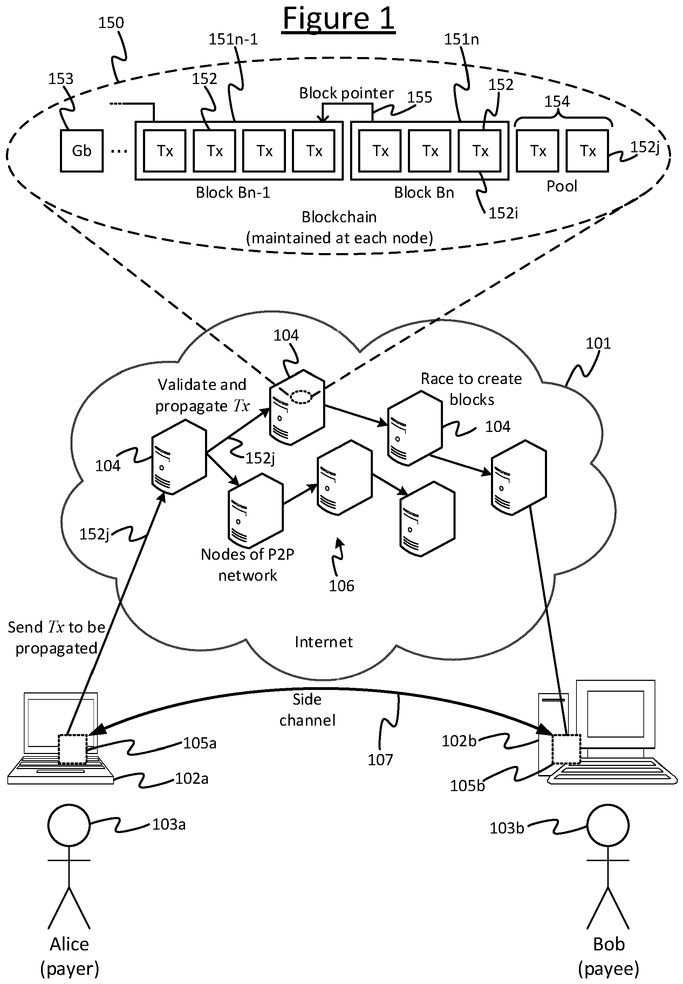

Figure 1 shows an example system 100 for implementing a blockchain 150. The system 100 may comprise of a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as Application Specific Integrated Circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 160. As mentioned above, maintaining a copy of the blockchain 150 does not necessarily mean storing the blockchain 150 in full. Instead, the blockchain 150 may be pruned of data so long as each blockchain node 150 stores the blockheader (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set 154 of transactions 152 waiting to be incorporated into blocks 151. The ordered set 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when an entity, such as a user or machine, 103 wishes to enact a new transaction 152j, then the entity sends the new transaction from its computer terminal 102 to a recipient. The entity or the recipient will eventually send this transaction to one or more of the blockchain nodes 104 of the network 106 (which nowadays are typically servers or data centres, but could in principle be other user terminals). It is also not excluded that the entity 103 enacting the new transaction 152j could send the transaction to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the entity 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned is whether it has yet been validly redeemed by the input of another, onward transaction 152j according to the blockchain node protocol. Another condition for a transaction to be valid is that the output of the preceding transaction 152i which it attempts to assign or redeem has not already been assigned/redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered set 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered set of transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. A significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the ordered set of yet to be published transactions 154 at any given time, depending on when they started searching for a solution or the order in which the transactions were received. Whoever solves their respective puzzle first defines which transactions 152 are included in the next new block 151n and in which order, and the current set 154 of unpublished transactions is updated. The blockchain nodes 104 then continue to race to create a block from the newly defined outstanding ordered set of unpublished transactions 154, and so forth. A protocol also exists for resolving any "fork" that may arise, which is where two blockchain nodes 104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to assign an accepted amount of the digital asset in a new special kind of transaction which distributes a defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network but do not participate in validating, constructing or propagating transactions and blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered set of transactions 154 maintained at a given blockchain node 104, that blockchain node 104 will start competing to solve the proof-of-work puzzle on the latest version of their respective ordered set of transactions 154 including the new transaction 152 (recall that other blockchain nodes 104 may be trying to solve the puzzle based on a different ordered set of transactions154, but whoever gets there first will define the ordered set of transactions that are included in the latest block 151. Eventually a blockchain node 104 will solve the puzzle for a part of the ordered set 154 which includes Alice's transaction 152j). Once the proof-of-work has been done for the ordered set 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

UTXO-BASED MODEL

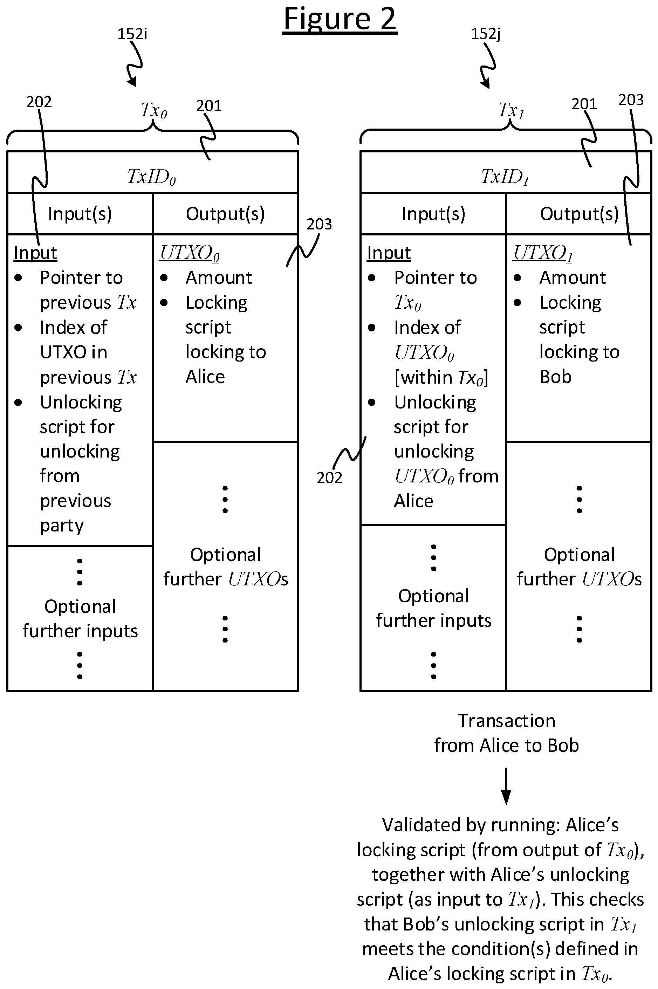

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ comprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> <$P_A$> ‖ [Checksig $P_A$] where "‖" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data comprises the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered set of transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node that publishes her transaction 104. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that publishes the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 107 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

PRELIMINARIES

**Probabilistic Filters**

Probabilistic filters are memory efficient data structures used to test whether an element is part of a set. False negatives are never possible, meaning that if an item is added to a probabilistic filter then the filter will always be able tell if the same item is presented again. However, false positives are possible, with a false positive probability that depends on several factors (e.g. the size of the probabilistic filter). In other words, there is a trade-off between the space-efficiency of the filter and the false positive probability.

The two most widely used probabilistic filters are Bloom filters and Cuckoo filters. Both filters are initialized providing a target false positive probability (fpp) and an expected number of elements. One fundamental difference between these two filters is that Bloom filters can accommodate any number of elements, but when the number of elements inserted is higher than the number of expected elements the false positive probability of the filter increases (up to 100%). Conversely, Cuckoo filters maintain the target false positive rate, but the insertion of new elements after the expected number is not guaranteed (insertion may be rejected). That is, the maximum size of the filter is not flexible after creation and in order to accommodate additional elements beyond the maximum number, a new filter must be created. Another difference between these two filters is that Cuckoo filters allow deletion of previously inserted elements, while this is not possible in Bloom filters. Note that Bloom and Cuckoo are just two types of probabilistic filters and the present invention is not limited to just these two examples.

The space efficiency of each of the two filters is similar: the cost, in bits per element, for a Bloom filter is $1.44 * \log_2 \frac{1}{fpp}$ while for a Cuckoo filter is $\frac{\log_2 \frac{1}{fpp} + 2}{load}$, where *load* is the filter load (usually between 90 and 95%).

Cuckoo filters are more time-efficient, performing insertions, deletions and lookup in O(1), where the notation O( ) represents the complexity of the algorithm. O(1) represents a constant complexity and a fast algorithm, whereas O(k) represents a complexity that increases with k and a slower algorithm. Bloom filters perform the same operations, except deletion that is not supported, in O(k) where k is the number of hash functions of the Bloom filter.

## Possible Double-Spending Attacks: Re-spend Attack

Light clients transmit signed transactions to a blockchain node 104, which are then broadcast to the entire network 106. Therefore, for a certain amount of time these transactions are present in only a portion of the network 106 (due to bandwidth limits). This means that a UTXO that has already been spent at one or more blockchain nodes 104 (i.e. there is a transaction spending this UTXO in the set of unpublished transactions maintained by those blockchain nodes 104) can still be spendable at other blockchain nodes 104. An attacker could exploit this vulnerability to double-spend the same UTXOs in different parts of the network 106. The double-spending would be eventually detected and only one of these transactions ends up being published in a block 151, but a node 104 accepting the other one of these 0-conf transactions (spending one of those UTXOs) would be defrauded.

Historically, two main re-spend attacks were possible:

- Fast re-spend: a re-spend transaction is transmitted almost simultaneously with the legitimate transaction.
- High fee re-spend: a re-spend transaction is transmitted with a higher transaction fee than the legitimate transaction.

On one particular blockchain network (the Bitcoin network), fast re-spend attacks have a 10% probability of succeeding if broadcast within 0.5 seconds form the legitimate transaction (the probability of succeeding is near to 0% otherwise). High fee re-spend attacks have a probability of succeeding of around 28.7% if broadcast within 0.5 seconds, with the probability decreasing to 17.5% if broadcast within 1 second and shrinking to 5.5% if broadcast within 5 seconds.

Therefore, it is almost impossible to successfully complete a re-spend attack at a blockchain node 104 in most cases, especially if the merchant is broadcasting the legitimate transaction. The client does not know the exact time the transaction will be broadcast: if the attacker performs a re-spend attack too early the transaction is detected and the legitimate one is rejected (and the sale not completed), if the re-spend attack is performed too late the probability of succeeding is almost 0%. However, light clients rely on a blockchain node 104 to validate transactions and these effects could be amplified if the blockchain node 104 is experiencing technical difficulties (e.g., low bandwidth) or if has been compromised.

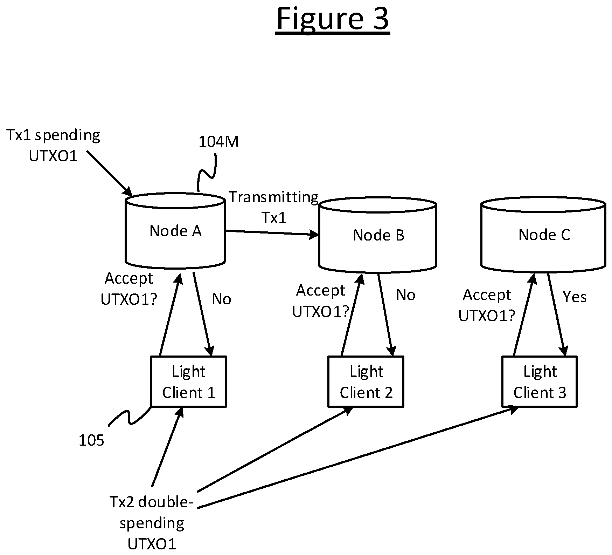

In the example of Figure 3, the blockchain node A receives a transaction Tx1 spending UTXO1 and transmits it to the blockchain node B. Blockchain node C is not aware that UTXO1 has been spent in Tx1. An attacker double-spends UTXO1 by sending another transaction Tx2 containing the same UTXO1 to the light clients (light clients 1, 2 and 3 in Figure 3). While light clients 1 and 2 reject Tx2, light client 3 (which relies on Node C to check transactions) does not reject transaction Tx2. If a merchant running light client 3 accepts Tx2 with 0-conf relying on the UTXO pool of node C and, successively, Tx1 is inserted in a valid block, then light client 3 loses its digital assets.

## Possible Double-Spending Attacks: Temporary Forks

A temporary fork occurs when two blockchain nodes 104 find the same block at the same time, causing a temporary split in the blockchain 150. Eventually the blockchain nodes 104 agree on the same version of the chain (e.g. using Nakamoto consensus) and blockchain nodes 104 on the "losing" fork discard the blocks, accepting the "winning" fork and its blocks.

Some transactions could be broadcast to only a fraction of the network 106. This is the case for example of transactions without transaction fees (e.g., businesses that have special agreements with blockchain nodes can pay a flat monthly fee to publish unlimited transactions). These transactions became available to the entire network 106 only once a block contained the transactions is published: all the nodes 104 that receive the published block can check the transactions contained in it and request the missing ones. However, during a temporary fork, one or more transactions could be inserted in a block of only that version of the blockchain 150. A blockchain node 104 running the alternative version might not be aware of a transaction until the fork is resolved. These nodes would initially accept other transactions spending the same UTXOs already spent in the first version of the chain and, then, reject them when Nakamoto consensus is reached (supposing the first version of the chain wins the race).

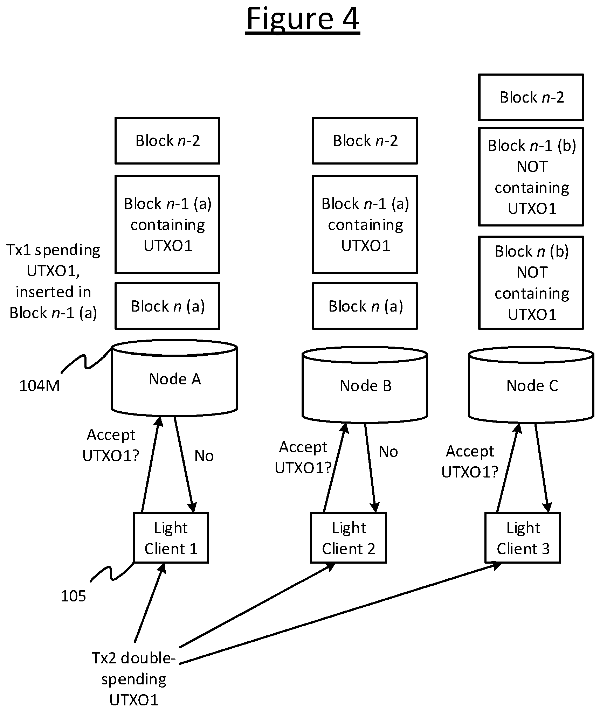

In the example in Figure 4, the blockchain 150 is temporarily split into two chains, chain (a) and chain (b). A transaction Tx1 spending UTXO1, is inserted in a block in the chain (a) but not in chain (b), therefore UTXO1 is still spendable on chain (b). This can be exploited by an attacker to perform a double-spending attack. Another transaction Tx2 spending UTXO1 would be rejected by blockchain node A and B but accepted by blockchain node C. Light client 3 relying on node C to verify its transactions with 0-conf (or even 1-conf in this example) would accept Tx2. Supposing that consensus is finally reached and the winning chain is the chain (a), light client 3 would lose its digital assets.

IDENTIFYING DOUBLE-SPEND ATTEMPTS

As discussed above, light clients (or users in general) that want to accept 0-conf transactions must verify the UTXOs used as input of these transactions. These UTXOs must be valid and not already spent by other transactions, including transactions not yet in a published block 151 but already in the ordered set of unpublished transactions 154. Blocks 151 with more than six confirmations are generally considered as being immutable and, if a UTXO has been spent in one of those blocks, it can be assumed that a transaction trying to spend this UTXO is rejected by any blockchain node 104. This UTXO, in fact, has already been removed from the UTXO pool of all the blockchain nodes 104. In recently spent UTXOs (e.g. those in the most recent six blocks of the blockchain 150), the same assumption cannot be made, and double-spending of a UTXO is theoretically possible. Moreover, the sets of unpublished transactions 154 of different blockchain nodes 104 are not synchronized, meaning that a transaction can be present in only a portion of the network 106.

In order to improve security, a blockchain node 104 can create a probabilistic filter (e.g., a Bloom Filter or a Cuckoo filter) containing all the UTXOs spent in transactions in the mempool and transmit it to light clients. Light clients 105 can use the probabilistic filter as a mempool membership test, accepting a transaction only if all the UTXOs used as input fail the membership test (i.e., the UTXOs were never spent in transactions in the mempool and thus were never inserted in the filter). The filter may be extended to include transaction outputs present in the last x blocks, e.g. the last six or ten blocks.

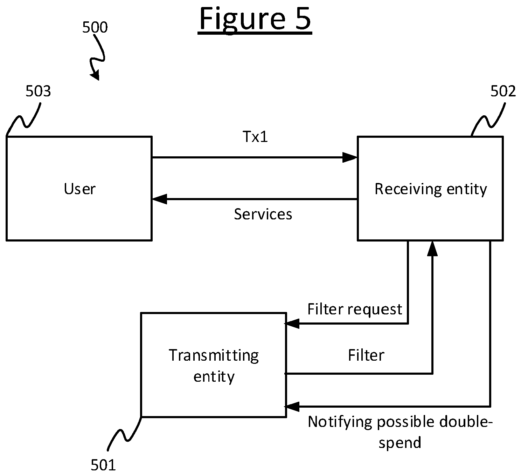

An example system 500 for implementing embodiments of the present invention is illustrated in Figure 5. The system 500 comprises a transmitting entity 501 and a receiving entity 502. The system may comprise multiple different transmitting entities 501 (not shown) and /or multiple different receiving entities 502 (also not shown). The system may also comprise one or more users 503. As used herein, the term "transmitting entity" 501 is used to refer to a party configured to generate and transmit a probabilistic filter to one or more receiving entities. Similarly, the term "receiving entity" 502 is used to refer to a party configured to receive a probabilistic filter for the purpose of checking for membership, within the filter, of one or more transaction outputs. The term "user" 503 is used to refer to a party configured to supply a receiving entity with one or more blockchain transaction outputs (e.g. as party of a transaction or transaction template) that may or may not have already been spent by a previous transaction.

Each transmitting entity 501, receiving entity 502 and user 503 operates respective computer equipment (not shown). The respective computer equipment of each transmitting entity 501, receiving entity 502 and user 503 comprises respective processing apparatus comprising one or more processors, e.g. one or more CPUs, GPUs, other accelerator processors, application specific processors, and/or FPGAs. The respective computer equipment of the transmitting entity 501, receiving entity 502 and user 503 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the respective computer equipment stores software comprising a respective instance of at least one client application 105 arranged to run on the processing apparatus. It will be understood that any action attributed herein to a given party may be performed using the software run on the processing apparatus of the respective computer equipment. The respective computer equipment of each of the transmitting entity 501, receiving entity 502 and user 503 may comprises at least one user terminal, e.g. a desktop or laptop computer, a tablet, a smartphone, or a wearable device such as a smartwatch. The computer equipment of a given party may also comprise one or more other networked resources, such as cloud computing resources accessed via the user terminal.

In some embodiments, the user 503 may send a transaction to the receiving entity 502 using an offline device that is preloaded with one or more UTXOs. For instance, the offline device may take the form of a card (e.g. a credit card or the like) which can be loaded when connected to an online device. For instance, the user 503 may pay using the receiving entity 502 using a contactless card, whereby the card is configured to sign a transaction and transmit it to the receiving entity 502 using near-field communication (NFC) or a similar wireless communication channel.

In some embodiments, the transmitting entity 501 may operate a blockchain node 104. In some embodiments, each receiving entity 502 may take the role of, or at least operate computing equipment configured to run, a client application 105. For instance, the receiving entity 502 may be configured to perform the actions of Alice 103a and/or Bob 103b described above. Similarly, each user 503 may take the role of, or at least operate computing equipment configured to run, a client application 105.

For brevity, the present invention will be described with reference to a customer (user 503), merchant (receiving entity 502) and blockchain node (transmitting entity 501). However it will be appreciated that these labels are not intended to be limiting. In particular, the transmitting entity 501 need not necessarily be a blockchain node 104, as long as the transmitting node 501 has access to a set of spent transaction outputs.

In the illustrative example of Figure 5, a customer 503 provides a transaction Tx1 to the merchant 502. The transaction Tx1 comprises one or more inputs referencing respective outputs of a previous (i.e. earlier generated) transaction or transactions. For instance, the transaction may be intended to transfer ownership of an amount of the digital asset from the customer 503 to the merchant 502 in return for goods or services. The merchant 502, wanting to check that the previous output(s) referenced by the input(s) of Tx1 have not already been spent, obtains a probabilistic filter from the blockchain node 501. The merchant 502 may request the filter from the blockchain node 501 when receiving Tx1, or in advance of receiving Tx1. That is, the merchant 502 may already have received the filter and store the filter for later use. The blockchain node 501 may regularly send updated filters to the merchant 502, as discussed below. The filter contains a compressed representation of a set of identifiers. Each identifier identifies a respective spent transaction output, i.e. an output of a transaction that has already been spent by an earlier transaction. The merchant 502 supplies the outputs of Tx1 (or rather their respective identifiers) to the filter to check for their inclusion in the filter. The merchant 502 is able to determine, using the filter, whether the output(s) reference by Tx1 either definitely have not already been spent (i.e. are definitely not included in the filter), or possible have already been spent. If the merchant 502 finds that the output(s) definitely have not already been spent (i.e. the user 503 is definitely not making a double-spend attempt with Tx1), then the merchant 502 may accept Tx1, e.g. in return for goods or services. On the other hand, if the merchant 502 finds that the output(s) may have already been spent (i.e. the user 503 may be making a double-spend attempt with Tx1), then the merchant 502 may notify the blockchain node 501. In response, the blockchain node 501 may check whether the output(s) are indeed recorded as being spent, i.e. whether the blockchain node 501 did include a respective identifier of those outputs in the filter transmitted to the merchant 501. The blockchain node 501 may then inform the merchant 502 of the outcome, and/or pass on information pertaining to a double-spend attempt to the relevant authorities.

More generally, the blockchain node 501 is configured to generate a first probabilistic filter. The first probabilistic filter comprises (or encodes) a representation of respective identifiers of a first set of previously spent transaction outputs (STXOs). For instance, the first set of STXOs may be spent by some or all of the transactions included in the ordered set of unpublished transactions maintained by the blockchain node 501 (or a different blockchain node 501). In some examples, the first set of STXOs may be spent by one or more transactions included in one or more blocks of the blockchain, e.g. all transactions included in the last n blocks of the blockchain, e.g. the last six blocks. That is, the first set of STXOs may be spent by one or more transactions recorded in any of the last n blocks. Note that the STXOs need not necessarily be recorded in any of last n blocks, and may instead have been recorded in any or all of the blocks of the blockchain.

Preferably, the blockchain node creates a new filter for every new block that is to be published. The filter encodes a representation of the STXOs that are already present in the ordered set 154, plus the ones in the new incoming transactions. The blockchain node 501 need not necessarily add the STXOs present in previous blocks, as they may already be present in a previous filter.

The blockchain node 501 makes the first probabilistic filter available to the merchant 502. For instance, the blockchain node 501 may transmit the filter directly to the merchant 502, or broadcast the filter to multiple merchants 502, or publish the filter on an accessible source (e.g. on the internet), or any combination of these or other options.

Each STXO encoded by the first probabilistic filter is identified by a respective identifier. In some examples, the identifier may be based on the transaction comprising the STXO (which was a UTXO before being spent). For instance, an STXO may be identified by a transaction identifier (TxID) of the transaction and an output index within that transaction, e.g. the TxID concatenated with the output index. In other examples, a hash of just the STXO itself may be used as an identifier.

The blockchain node 501 may, in some embodiments, send (or otherwise make available) a second probabilistic filter to the merchant 502. The second probabilistic filter comprises (or encodes) respective identifiers of a second set of previously spent transaction outputs (STXOs). The first and second sets of STXOs may be exclusive (i.e. non-overlapping) sets. Alternatively, the second set of STXOs may include one or more STXOs included in the first set of STXOs. For instance, the second filter may be generated by updating the first filter to include one or more additional STXOs, e.g. those that have been referenced by transactions added to the mempool of the blockchain node 501 in the time since the first filter was generated. If the first filter was generated to include only STXOs that were referenced by transactions that were in the mempool at the time of generation, and those transactions have now been accepted in a block of the blockchain, the second filter may be similarly generated to include only STXOs that are referenced by transactions that are currently in the mempool. In that case, the first and second sets may be non-overlapping. In some examples, each filter generated and sent to the merchant 502 by the blockchain node 501 may be based on a distinct set of STXOs.

The merchant 502 (e.g. a light client, another blockchain node or other type of blockchain node, etc.) obtains one or more probabilistic filters from the blockchain node 501, e.g. the first and/or second filters. The merchant 502 also obtains one or more transaction outputs, or at least a respective reference to the one or more transaction outputs. As an example, the merchant 502 may obtain a transaction template from a user 503, wherein the transaction template includes one or more inputs, each input referencing a respective output of a previous transaction (note that different previous transactions may be referenced by different ones of the inputs of the template transaction). In other examples, the user 503 may provide the merchant 502 with a reference to the transaction output(s), but not necessarily in the form of a transaction template.

Note that the merchant 502 may obtain the probabilistic filter(s) and transaction outputs in any suitable manner, e.g. receiving directly from the blockchain node 501 and user 503 respectively.

The merchant 502 may also obtain (e.g. receive) one or more additional filters from one or more additional (i.e. different) blockchain nodes 501 (or transmitting entities more generally).

Having obtained one or more probabilistic filters, the merchant 502 may use one, some or all of the filters to determine whether any of the transaction outputs obtained from the user 503 may have already been spent. That is, the merchant 502 checks whether the transaction output(s), or rather their respective identifiers, are elements in one or more of the probabilistic filters. Due to the probabilistic nature of the filters, after performing the check the merchant 502 can either be certain that the identified transaction outputs are not double-spend attempts (that is they exist on the blockchain network 106 as unspent transaction outputs (UTXOs)), or the merchant 502 can be presented with evidence that the identified transaction outputs may be double-spend attempts.

If the identified transaction outputs are not present in the probabilistic filter(s), the merchant 502 may proceed to transact with the user 503, e.g. to exchange goods, services or data.

If the identified transaction outputs may be present in the probabilistic filter(s), the merchant 502 may choose to stop transacting with the user 503. Additionally or alternatively, the merchant 502 may transmit a notification to the blockchain node(s) 501 that provided the corresponding filter(s), or to any other blockchain node. For example, the merchant 502 may inform a blockchain node 501 of a possible double-spend attempt. The merchant 502 may request that the blockchain node 501 identify if the transaction output(s) are indeed double-spend attempts.

Having received a notification from the merchant 502, the blockchain node 501 may determine whether the identified transaction outputs are indeed STXOs, or if the probabilistic filter used by the merchant 502 has returned a false positive. That is, the blockchain node 501 checks whether the identified transaction outputs are referenced by a transaction included in the mempool of the blockchain node 501 or in a published block on the blockchain 150.

The blockchain node 501 may transmit the result of this check to the merchant 502, e.g. to inform the merchant 502 of whether or not the identified transaction outputs are double-spend attempts. Additionally or alternatively, the blockchain node 501 may notify a relevant authority of the double-spend attempt.

Assuming that the transaction outputs referenced by the transaction template obtained by the merchant 502 are not double-spend attempts, the merchant 502 may accept the transaction template. This may include signing the template with a digital signature and/or transmitting a completed version of the transaction template to the blockchain network 106.

Alternatively, if the merchant 502 accepts the transaction template, the merchant 502 may ask the user 503 to sign and return it. The merchant 502 can then transmit the transaction (which has been signed by the user 503) to the blockchain network 106. In a trustless scenario, this is necessary because otherwise a merchant 502 may cheat and say that a UTXO is a double spending, reject the template and then ask the user 503 for other UTXOs. Then the merchant 502 could collect both sets of UTXO, thus doubling its earnings (doubling or more if the process is reiterated). To prevent this, the user 503 may only sign the UTXOs when they are approved by the merchant 502.

In some embodiments, the merchant 502 may comprise a local server that obtains the probabilistic filter(s), and a plurality of light clients or other devices that each transmit transaction outputs (or their respective identifiers) to the server. The server supplies the identified transaction outputs to the probabilistic filter(s) to check for membership, and then returns the result to the light clients.

As set out above, the receiving entity 502 (e.g. a merchant or blockchain node) may use a probabilistic filter for a membership test. A transmitting entity 501 (e.g. a blockchain node) can create a probabilistic filter (e.g., a Bloom filter or a Cuckoo filter) containing all the UTXOs spent in transactions included in the ordered set of unpublished transactions 154 and then transmit that filter to the receiving entity 502, e.g. one or more light clients. Maintaining and serving a probabilistic filter is less computationally expensive for the transmitting entity than the current checks required for identifying double-spend attempts, and the filter has to be updated only once per new transaction (in contrast to checking the mempool and the last six blocks every time a light client makes a request).

Probabilistic filters have a predefined false positive rate, but they never have false negatives. A light client can use a probabilistic filter for a membership test: if the filter states a "No", the transaction can be accepted immediately. If the filter states a "Yes", or more correctly a "Probably" (due to the false positives), the user 503 (e.g. a customer) is offered a choice: wait until the transaction is inserted in a valid block or pay using another transaction. Probabilistic filters are cheap to transmit and to store, allowing multiple fast checks of different blockchain nodes (i.e., the receiving entity 502 can check that a UTXO in not already spent in any part of the network) and in previous blocks (i.e., the last six blocks for 6-conf deep), in this case a 0-conf transaction is accepted only if all the filters state a "No".

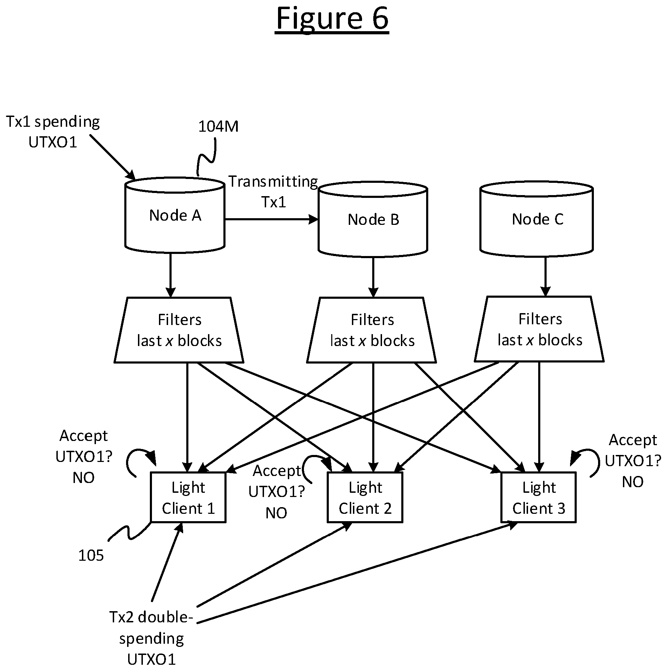

An example of the architecture is shown in Figure 6. Three blockchain nodes A, B and C create and maintain the filters containing the UTXOs spent in the last x blocks, including UTXO1 spent in Tx1 (Tx1 is currently only in the ordered set of unpublished transactions 154 of blockchain node A and B). If light clients receive a new transaction Tx2 trying to spend UTXO1, before accepting it, they update their filters and check for membership of UTXO1. All the light clients detect that UTXO1 has already been spent somewhere in the network 106 (i.e. by Tx1), and they all reject Tx2.

Due to false positives, some UTXOs can be rejected even if they have not been spent anywhere. For these UTXOs, 0-conf acceptance may not be possible and a user that wants to spend those UTXOs can use them at a later time (e.g. when filters are replaced) or spend them anyway and wait for the transaction containing these UTXOs to be inserted in valid block.

As stated above, in order to record UTXOs in a probabilistic filter they need to be uniquely identified. Typically UTXOs do not have an individual ID. When a new transaction is created, the transaction inputs vector identifies which UTXOs will be consumed by reference to the transaction hash (the transaction ID) and the output index (which identifies the UTXO in the "vout" vector of that transaction).

In some embodiments, a similar technique to identify the UTXOs being spent is used, hereafter called a UTXO ID. The UTXO ID is defined as the concatenation of the transaction ID that contains that UTXO and its output index:

$$UTXO\ ID = transaction\ ID + output\ index$$

The size of the UTXO ID, according to at least one blockchain protocol, is the sum of transaction ID (32 bytes) and the output index (8 bytes), for a total size of 40 bytes per UTXO ID. It will be appreciated that other variations of the UTXO ID may be used. That is, the UTXO ID may be a function of the TxID and the output index, but not necessarily a concatenation.

The process performed by a transmitting entity 501 (e.g. a blockchain node) to create and maintain a filter is summarised here. First, for each new candidate block being assembled by the blockchain node:

1. the blockchain node creates a new probabilistic filter and inserts all of the UTXO IDs of the UTXOs spent in transactions already in the mempool.

Then, every time a new transaction is received:

2. The transaction is validated and, if valid:

a. The transaction is inserted in the mempool, and
b. The ID of the UTXOs used as inputs in the new transaction are inserted in the filter.

When a new block is published, the blockchain node archives the current filter (e.g., it is stored on a hard drive) and initializes a new one inserting all the UTXOs spent in transactions already in the mempool. Older filters can be deleted (e.g., keep only the last 6 filters). It will be appreciated that it is not essential for the blockchain node to store the current filter.

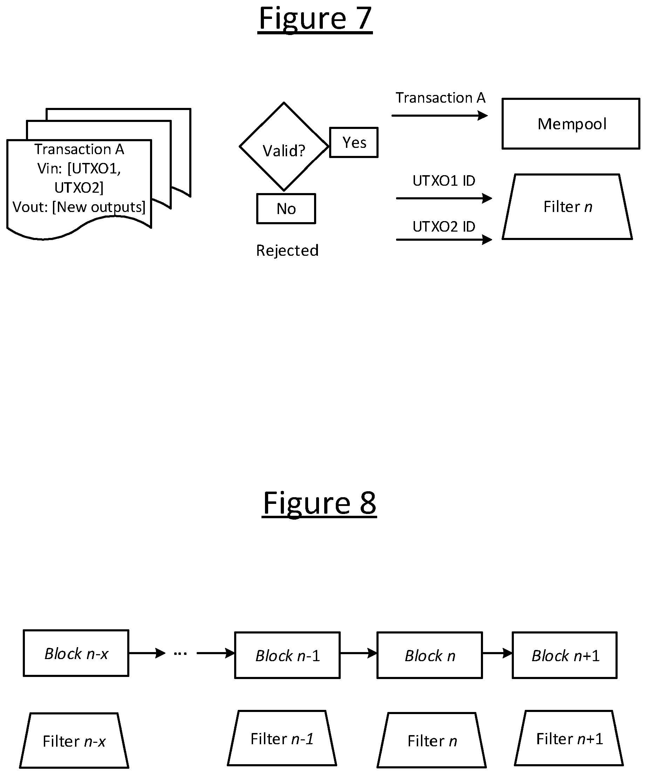

Figure 7 illustrates the process that may be performed when receiving a new transaction: a blockchain node validates the transaction (transaction A) and inserts it in its ordered set of unpublished transactions 154. At the same time the UTXOs spent in that transaction are inserted in probabilistic filter n.

As already mentioned, filter n may be updated each time a new transaction is inserted in the ordered set of unpublished transactions 154 and until a new block is published, then a new filter, n+1, is initialized. This sequence is illustrated in Figure 8. Therefore, each blockchain node may maintain a rolling window with filters containing the ID of the UTXOs spent in the last x blocks plus the current mempool (filter n+1). Note that all the transactions in the ordered set of unpublished transactions 154 are added to the filter, independently from the fact that they are inserted in a block. Note here that unpublished means that the transaction has not been published in a block, and is instead only present in the mempool of a node 104.

Again, as already mentioned, maintaining only the last n filters (e.g. n=6 for 6-conf deep) implies that UTXOs spent in blocks deeper than n are guaranteed to be removed by all the UTXO pools, while the ones spent in the last n blocks could still be spendable in parts of the network 106 (e.g., they are vulnerable to double-spending attacks and temporary chain splits). For example, a blockchain node may not have received the latest block, or it may have received a block belonging to a temporary fork (where a UTXO is still available). Sending a transaction to one of these nodes would result in an initial acceptance of the transaction, which is then ultimately rejected. This is not a problem for the blockchain 150 per se, but it is indeed a problem for merchants or the like that accept 0-conf transactions. Bloom and Cuckoo are just two types of probabilistic filters that may be used by the transmitting entity 501. Bloom filters and Cuckoo filters are particularly suitable since element deletion is not a requirement. The following table provides a summary of the advantages and disadvantages of the two filters:

| | Bloom Filter | Cuckoo Filter |
|---|---|---|
| Advantages | Insertion is never rejected. | Insertion and lookup O(1). False positive rate guaranteed. |

(continued)

|  | Bloom Filter | Cuckoo Filter |
|---|---|---|
| Disadvantages | Insertion and lookup O(k). False positive rate increases when number of elements exceed the capacity. | Insertion may be rejected, and a new filter must be initialized. |

USE CASE: Point of Sale Instant Transaction

A merchant 502 running a light client and willing to instantly accept a new transaction, (which may or may be in addition to the transaction verification process known in the art as "simplified payment verification"), will verify the "spendability" of the UTXOs used as transaction inputs. The UTXO spendability is verified using the probabilistic filters to perform a membership test and the transaction is considered spendable only if all the results are negative. For increased security and to prevent double-spending attacks, the merchant is be able to synchronize the filter with more than one blockchain node. The trade-off between the level of security and the bandwidth consumption can be chosen by the light client.

When a user 503 requests a good or a service, the merchant 502 executes the verification process, as follows:

1. The merchant light client 502 requests the last x filters (e.g., x=6 for 6-conf deep protection against temporary forks) from one or more blockchain nodes (if not already received).

2. As new transactions are added to the last filter over time, the light wallet 502 synchronizes the last filter with one or more blockchain nodes 501 before accepting a transaction.

3. The merchant 502 sends a transaction template to the user 503. The template includes all the conditions to complete the sale, like the address where the payment has to be sent, VAT, tips, optional other costs and so on. The input fields are left blank.

The user 503 fills the merchant's template, adding the inputs and the change, but not the signatures required to unlock the funds. The user 503 then retransmits the template to the merchant 502. Alongside the filled template, the user 503 must transmit the full transaction data of the UTXOs being spent and a Merkle path. This information proves that the transaction exists and contains enough funds locally, so that no additional work for verification is needed by blockchain nodes 501.

4. The merchant 502 retrieves all the UTXOs in the input field of the template and verifies that the Merkle proof is valid.

5. The UTXO membership test is performed (using UTXO IDs):

a. If none of the UTXOs is in any of the probabilistic filters:

i. The UTXOs are not already in the mempool or in previous blocks (guaranteed, there are no false negatives).
ii. Merchant 502 asks the user 503 to sign the template and accepts it, 0-conf.

b. If one or more UTXOs are in a probabilistic filter:

i. The positive UTXOs may already be in the mempool or in a recently published block (there is a small uncertainty due to the filter false positives).
ii. Merchant 502 asks the user 503 to wait confirmation (and, in this case, to sign the template) or to update the template changing the invalid UTXOs in the input.

While rejecting a transaction and asking to update the template with new unspent transaction outputs may look like a laborious process, if a user 503 pays with a wallet that supports this mechanism, the entire process of checking the UTXOs, updating the template and signing it can be executed automatically in milliseconds.

When a light client 502 detects a possible double-spending, it may alert the network 106. Blockchain nodes 501 perform an additional check to exclude the cases of probabilistic filter false positives and, if the double-spending is confirmed, the signatory and the incriminated transactions may be reported. The transactions containing the same UTXOs as input can be used as proof of dishonesty, as if it is a cheque fraud (at this point authorities can choose how to intervene and resolve the dispute). The process described above can therefore be expanded as follows.

The UTXO membership test is performed and, if one or more UTXOs being spent are in a probabilistic filter:

1. The merchant light client 502 alerts the blockchain nodes.
2. The blockchain nodes 501 perform the final check and, if a UTXO is already spent in a transaction in the ordered set of unpublished transactions 154:

a) The blockchain node 501 can raise an alert on the entire network 106.
b) The blockchain node 501 can report the signatory to authorities, using the two (or more) signed transactions as proof of dishonesty.

Some of the advantages of the present invention are as follows. Probabilistic filters are cheap to maintain: several blockchain nodes 501 can be queried, increasing the security of the network. Merchants 502 running a light client do not need to be always online in order to check double-spends, they just need to connect before receiving a payment and receive/transmit a small amount of data: update the last x probabilistic filers (x=6 for 6-conf) and transmit the template. Users 503 willing to pay in a business running light clients 502 do not need to be online to perform a payment: they are just required to store the UTXOs they are willing to spend, their full transaction and their Merkle proof. Users 503 require minimal computational power: they just need to sign the transactions. Invalid UTXO are detected locally, using Merkle proof and the probabilistic filters. Merchant running light clients 502 cannot be used for spam attacks and DoS attacks. Blockchain nodes 501 can ban dishonest users and report them to the authorities.

The following describes an example implementation of the present invention. The size of the filter is computed using the following example 24-hour statistics:

- Average UTXOs in the input of a transaction: 3 UTXOs/Tx
- Average number of transactions per second: 7 Tx/s
- Average time between blocks: 625 s
- Average mempool size: 5 MB

  Average number of transactions per block: 7 x 625 = 4375 Tx
  Average number of UTXOs per block: 4375 x 3 = 13125 UTXOs

For comparison, supposing that a light client would like to check the UTXOs spendability without using the present invention, the client would require the full list of UTXO IDs (UTXO ID size is 40 bytes):
Size of the UTXO ID list: 13125 x 40 bytes = 525 KB

Now, using a filter according to the present invention:

$$\text{Bloom filter size (in bit)} = 1.44 * \log_2 \frac{1}{fpp} * UTXO \ per \ block$$

$$\text{Cuckoo filter size (in bit)} = \frac{\log_2 \frac{1}{fpp} + 2}{load} * UTXO \ per \ block$$

Parameters:

- False positive probability (fpp) = 0.1%
- Filter load (cuckoo filter only) = 95%

  Bloom filter size = 23.5 KB - compression ratio compared to the UTXO ID list: 4.5%
  Cuckoo filter size = 20.7 KB - compression ratio compared to the UTXO ID list: 3.9%

The size of the filters grow linearly with the number of expected elements. Suppose, for example, that a block has more transactions per second (i.e., double the number of transactions per seconds) or that requires more time to be published (i.e., double the time taken to publish), in both cases the size of the filter doubles as well. Moreover, transactions that are not immediately added to a block and stay in the mempool, must be added to following filters.

Since these circumstances are frequent, to avoid increased false positive rate (in case of Bloom filters) or insertion rejected (in case of cuckoo filters) a new filter can be configured to manage twice of the average UTXOs per block.

In this case a filter may be created with:

- fpp = 0.1%
- Expected elements = 2 * average UTXO per block = 26250

Bloom filter size = 47.0 KB
Cuckoo filter size = 41.4 KB

Filter size can be established dynamically by the transmitting entity 501, for example considering the average transactions per second in the last hour or in the last 24 hours. This allows the filters to grow accordingly with the traffic on the network 106, without wasting space.

Here the scalability of the proposed approach is presented, hypothesising that in the next few years some blockchain networks may process blocks up to 1 TB in size, containing up to 4 billion transactions. The following table summarizes the size of the filters and the bandwidth required to maintain them. An average transaction size of 250 bytes is assumed, with 3 UTXO/transaction and an average time between blocks of 10 minutes.

|  | Block info | | | | FPP 0.1% | FPP 0.01% |
|---|---|---|---|---|---|---|
|  | Size | UTXOs spent | Data | Bandwidth | Data | Bandwidth |
| Bloom Filter | 10 MB | 120000 | 215 KB | 0.35 KB/s | 287 KB | 0.47 KB/s |
|  | 100 MB | 1200000 | 2152 KB | 3.5 KB/s | 2870 KB | 4.7 KB/s |
|  | 1 GB | 12000000 | 21520 KB | 35 KB/s | 28700 KB | 47 KB/s |
|  | 1 TB | 12000000000 | 21520 MB | 35 MB/s | 28700 MB | 47 MB/s |
| Cuckoo Filter | 10 MB | 120000 | 188 KB | 0.31 KB/s | 241 KB | 0.40 KB/s |
|  | 100 MB | 1200000 | 1889 KB | 3.1 KB/s | 2413 KB | 4.0 KB/s |
|  | 1 GB | 12000000 | 18890 KB | 31 KB/s | 24130 KB | 40 KB/s |
|  | 1 TB | 12000000000 | 18890 MB | 31 MB/s | 24130 MB | 40 MB/s |

The following can be ascertained from the above table:

- Probabilistic filters representing blocks up to 100 MB are very cheap to maintain: between 12 MB and 18 MB to store 6 filters and a maximum bandwidth required of 4.7KB/s.
- Probabilistic filters representing 1 GB blocks can be handled by the majority of the devices currently available on the market, requiring between 120 MB and 180 MB to store 6 filters and a maximum bandwidth of 47KB/s.

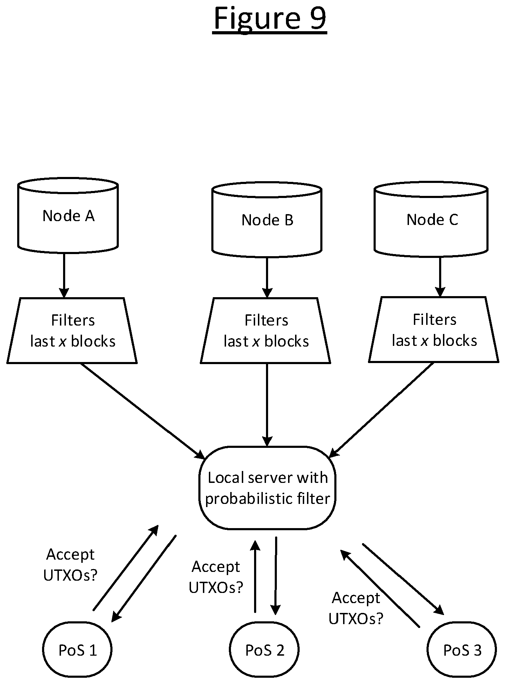

The above use case is optimized for small merchants that receive a transaction every few minutes. Their only requirement is to update the newest filter before accepting a 0-conf transaction. Larger merchants, on the other hand, may have different requirements: they usually have several points of sale (PoS) and process several transactions per second. Maintaining a probabilistic filter in each PoS is not efficient, wasting a lot of storage space and increasing the network traffic. In these circumstances a slightly different architecture may be required: a local server 1201 can store and maintain updated the probabilistic filters. The server 1201 can be always online and continuously updated. Each PoS 1202 transmits the filled templates and the other information received from a user 503 to the local server 1201 for verification. This reduces the network traffic and it is less computationally intensive for each single PoS 1202. An example of this architecture is shown in Figure 9.

USE CASE: Enhancing security of blockchain nodes

The present invention provides for a novel approach to detect invalid transactions and double-spending in light clients willing to accept 0-conf transactions. Previous approaches are not efficient since they require a lot of additional work of the blockchain nodes (light clients have to use multiple blockchain nodes to check transaction validity instead of doing it locally). Moreover, they expose the light clients to attackers willing to use them to perform denial-of-service attacks on the network 106 (e.g., by creating fake transactions and forcing the light clients to flood the blockchain nodes to verify them).

Like light clients, blockchain nodes can request UTXO probabilistic filters from other blockchain nodes. When validating new transactions received from light clients, in addition to standard validation checking, a blockchain node can test if the UTXOs have already been spent in other parts of the network. This technique works as an additional security measure to prevent double-spending. It also allows for fast detection of temporary chain splits and corrupted nodes.

USE CASE: Simple Merchant Wallet

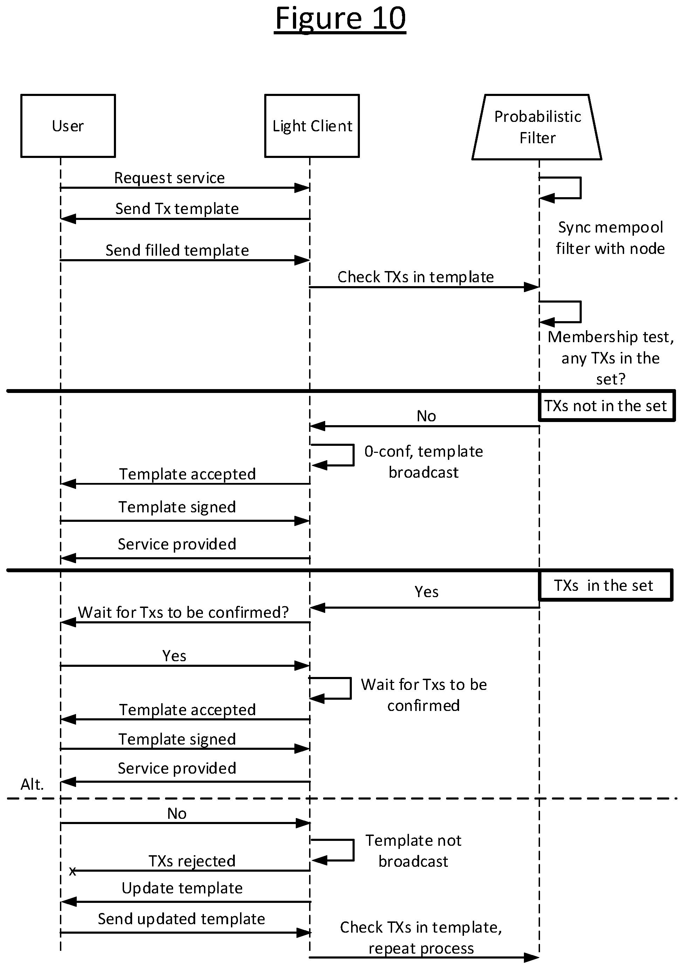

This section describes simple merchant wallets (SMW), light wallets useful for merchants or other parties with limited computational resources. SMWs are a typical use case of the present invention proposed, especially when accepting blockchain transactions instantly is crucial for the business. A SMW is a light wallet that can be used by merchants and PoS devices. A SMW only needs to create payment templates, send them to users (e.g. customers) and verify the transactions after the users have filled them. An SMW is particularly useful where transactions have to be validated as soon as possible, possibly with 0 confirmations on the blockchain, e.g., cafés, vending machines, etc. For example, a café must verify and accept payments and provide the beverages before transactions are inserted in the blockchain (a 6-conf deep validation would require, on average, 1 hour). An example flow for processing a transaction by an Instant SMW is shown in Figure 10.

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In non-preferred embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

**Claims**

1.  A computer-implemented method of identifying a double-spend attempt of a blockchain transaction output, wherein the method is performed by a transmitting entity (501) and comprises:

    generating a first probabilistic filter, wherein the first probabilistic filter encodes a respective identifier of each of a first plurality of spent blockchain transaction outputs available to the transmitting entity (501); and
    making the first probabilistic filter available to a receiving entity (502).

2.  The method of claim 1, wherein the first plurality of spent transaction outputs comprises a set of spent transaction outputs that have been spent by a respective transaction present in an ordered set of unpublished transactions maintained by a blockchain node (104), wherein each transaction in the ordered set of transactions has been validated by the blockchain node (104).

3.  The method of claim 1 or claim 2, wherein the first plurality of spent transaction outputs comprises a respective set of transaction outputs that have been spent by a respective transaction present in a respective block of the blockchain.

4.  The method of claim 3, wherein the first plurality of spent transaction outputs comprises multiple respective sets of transaction outputs, wherein each set of transaction outputs have been spent by a respective transaction present in a respective one of multiple blocks of the blockchain.

5. The method of any preceding claim, wherein the probabilistic filter is a Bloom filter or a Cuckoo filter.

6. The method of any preceding claim, wherein each respective identifier is based on a respective identifier of a respective transaction comprising the respective spent transaction output.

7. The method of claim 6, wherein each respective identifier is further based on a respective output index of the respective spent transaction output within the respective transaction.

8. The method of any preceding claim, comprising:

generating a second probabilistic filter, wherein the second probabilistic filter comprises a respective identifier of each of a second plurality of spent blockchain transaction outputs available to the transmitting entity (501); and making the second probabilistic filter available to a receiving entity (502).

9. The method of claim 8, wherein the generating of the second probabilistic filter comprises updating the first probabilistic filter to include a respective identifier of one or more of the second plurality of spent blockchain transaction outputs not already included in the first plurality of spent blockchain transaction outputs.

10. The method of any preceding claim, comprising:

receiving a notification that the receiving entity (502) has received a blockchain transaction output that the first or second probabilistic filter indicates is a double-spent attempt; and determining whether the blockchain transaction output is present in the first or second plurality of spent blockchain transaction outputs available to the transmitting entity (502).

11. The method of claim 10, comprising, informing the receiving entity that the blockchain transaction is not a double-spend attempt if the blockchain transaction output is determined not to be present in the first or second plurality of spent blockchain transaction outputs available to the transmitting entity (501).

12. The method of claim 10, comprising, informing the receiving entity and/or a different entity that the blockchain transaction is a double-spend attempt if the blockchain transaction output is determined to be present in the first or second plurality of spent blockchain transaction outputs available to the transmitting entity.

13. A computer-implemented method of identifying a double-spend attempt of a blockchain transaction output, wherein the method is performing by a receiving entity (502) and comprises:

obtaining a first probabilistic filter from a transmitting entity (501), wherein the first probabilistic filter encodes a respective identifier of each of a first plurality of spent blockchain transaction outputs available to the transmitting entity (501); obtaining an indication of one or more blockchain transaction outputs; and determining whether the one or more blockchain transaction outputs are double-spend attempts based on whether a respective identifier of the one or more blockchain transaction outputs is present in the first probabilistic filter.

14. Computer equipment comprising:

memory comprising one or more memory units; and processing apparatus comprising one or more processing units, wherein the memory stores code arranged to run on the processing apparatus, the code being configured so as when on the processing apparatus to perform the method of any of claims 1 to 13.

15. A computer program embodied on computer-readable storage and configured so as, when run on computer equipment, to perform the method of any of claims 1 to 13.

**Patentansprüche**

1. Computerimplementiertes Verfahren zum Identifizieren eines Versuchs eines doppelten Ausgebens einer Blockchain-Transaktionsausgabe, wobei das Verfahren durch eine Übertragungsentität (501) durchgeführt wird und umfasst:

Erzeugen eines ersten probabilistischen Filters, wobei das erste probabilistische Filter eine jeweilige Kennung jeder einer ersten Vielzahl ausgegebener Blockchain-Transaktionsausgaben, die für die Übertragungsentität (501) verfügbar sind, codiert; und
Verfügbarmachen des ersten probabilistischen Filters für eine Empfangsentität (502).

2. Verfahren nach Anspruch 1, wobei die erste Vielzahl ausgegebener Transaktionsausgaben einen Satz ausgegebener Transaktionsausgaben umfasst, die durch eine jeweilige Transaktion ausgegeben wurden, die in einem geordneten Satz nicht veröffentlichter Transaktionen vorhanden ist, die durch einen Blockchain-Knoten (104) verwaltet werden, wobei jede Transaktion im geordneten Satz von Transaktionen durch den Blockchain-Knoten (104) validiert wurde.

3. Verfahren nach Anspruch 1 oder Anspruch 2, wobei die erste Vielzahl ausgegebener Transaktionsausgaben einen jeweiligen Satz von Transaktionsausgaben umfasst, die durch eine jeweilige Transaktion ausgegeben wurden, die in einem jeweiligen Block der Blockchain vorhanden ist.

4. Verfahren nach Anspruch 3, wobei die erste Vielzahl ausgegebener Transaktionsausgaben mehrere jeweilige Sätze von Transaktionsausgaben umfasst, wobei jeder Satz von Transaktionsausgaben durch eine jeweilige Transaktion, die in einem jeweiligen von mehreren Blöcken der Blockchain vorhanden ist, ausgegeben wurde.

5. Verfahren nach einem der vorhergehenden Ansprüche, wobei das probabilistische Filter ein Bloom-Filter oder ein Cuckoo-Filter ist.

6. Verfahren nach einem der vorhergehenden Ansprüche, wobei jede jeweilige Kennung auf einer jeweiligen Kennung einer jeweiligen Transaktion, die die jeweilige ausgegebene Transaktionsausgabe umfasst, basiert.

7. Verfahren nach Anspruch 6, wobei jede jeweilige Kennung ferner auf einem jeweiligen Ausgabeindex der jeweiligen ausgegebenen Transaktionsausgabe innerhalb der jeweiligen Transaktion basiert.

8. Verfahren nach einem der vorhergehenden Ansprüche, umfassend:

Erzeugen eines zweiten probabilistischen Filters, wobei das zweite probabilistische Filter eine jeweilige Kennung jeder einer zweiten Vielzahl ausgegebener Blockchain-Transaktionsausgaben, die für die Übertragungsentität (501) verfügbar sind, umfasst; und
Verfügbarmachen des zweiten probabilistischen Filters für eine Empfangsentität (502).

9. Verfahren nach Anspruch 8, wobei das Erzeugen des zweiten probabilistischen Filters ein Aktualisieren des ersten probabilistischen Filters umfasst, um eine jeweilige Kennung einer oder mehrerer der zweiten Vielzahl ausgegebener Blockchain-Transaktionsausgaben, die nicht bereits in der ersten Vielzahl ausgegebener Blockchain-Transaktionsausgaben enthalten sind, einzuschließen.

10. Verfahren nach einem der vorhergehenden Ansprüche, umfassend:

Empfangen einer Benachrichtigung, dass die Empfangsentität (502) eine Blockchain-Transaktionsausgabe, die das erste oder das zweite probabilistische Filter als einen Versuch eines doppelten Ausgebens angibt, empfangen hat; und
Bestimmen, ob die Blockchain-Transaktionsausgabe in der ersten oder der zweiten Vielzahl verbrauchter Blockchain-Transaktionsausgaben, die für die Übertragungsentität (502) verfügbar sind, vorhanden ist.

11. Verfahren nach Anspruch 10, umfassend ein Informieren der Empfangsentität, dass die Blockchain-Transaktion kein Versuch eines doppelten Ausgebens ist, wenn bestimmt wird, dass die Blockchain-Transaktionsausgabe nicht in der ersten oder der zweiten Vielzahl ausgegebener Blockchain-Transaktionsausgaben, die für die Übertragungsentität (501) verfügbar sind, vorhanden ist.

12. Verfahren nach Anspruch 10, umfassend ein Informieren der Empfangsentität und/oder einer anderen Entität, dass die Blockchain-Transaktion ein Versuch eines doppelten Ausgebens ist, wenn bestimmt wird, dass die Blockchain-Transaktionsausgabe in der ersten oder der zweiten Vielzahl ausgegebener Blockchain-Transaktionsausgaben, die für die Übertragungsentität verfügbar sind, vorhanden ist.

13. Computerimplementiertes Verfahren zum Identifizieren eines Versuchs eines doppelten Ausgebens einer Blockchain-Transaktionsausgabe, wobei das Verfahren durch eine Empfangsentität (502) durchgeführt wird und umfasst:

Erhalten eines ersten probabilistischen Filters von einer Übertragungsentität (501), wobei das erste probabilistische Filter eine jeweilige Kennung jeder einer ersten Vielzahl ausgegebener Blockchain-Transaktionsausgaben, die für die Übertragungsentität (501) verfügbar sind, codiert;
Erhalten einer Angabe einer oder mehrerer Blockchain-Transaktionsausgabe(n) und
Bestimmen, ob die eine oder die mehreren Blockchain-Transaktionsausgabe(n) Versuche eines doppelten Ausgebens sind, basierend darauf, ob eine jeweilige Kennung der einen oder der mehreren Blockchain-Transaktionsausgabe(n) im ersten probabilistischen Filter vorhanden ist.

14. Computerausrüstung, umfassend:

einen Speicher, umfassend eine oder mehrere Speichereinheit(en); und
eine Verarbeitungseinrichtung, umfassend eine oder mehrere Verarbeitungseinheit(en), wobei der Speicher Code speichert, der angeordnet ist, um auf der Verarbeitungseinrichtung ausgeführt zu werden, wobei der Code dazu ausgelegt ist, das Verfahren nach einem der Ansprüche 1 bis 13 durchzuführen, wenn er sich auf der Verarbeitungseinrichtung befindet.

15. Computerprogramm, das auf einer computerlesbaren Speicherung verkörpert ist und dazu ausgelegt ist, das Verfahren nach einem der Ansprüche 1 bis 13 durchzuführen, wenn es auf einer Computerausrüstung ausgeführt wird.

**Revendications**

1. Procédé mis en œuvre par ordinateur pour identifier une tentative de double dépense d'une sortie de transaction de chaîne de blocs, le procédé étant exécuté par une entité émettrice (501) et comprenant les étapes suivantes :

générer un premier filtre probabiliste, le premier filtre probabiliste codant un identifiant respectif de chacune d'une première pluralité de sorties de transaction de chaîne de blocs dépensées disponibles pour l'entité émettrice (501) ; et
mettre à disposition le premier filtre probabiliste pour une entité réceptrice (502).

2. Procédé selon la revendication 1, dans lequel la première pluralité de sorties de transactions dépensées comprend un ensemble de sorties de transactions dépensées qui ont été dépensées par une transaction respective présente dans un ensemble ordonné de transactions non publiées maintenu par un nœud de chaîne de blocs (104), où chaque transaction dans l'ensemble ordonné de transactions a été validée par le nœud de chaîne de blocs (104).

3. Procédé selon la revendication 1 ou la revendication 2, dans lequel la première pluralité de sorties de transactions dépensées comprend un ensemble respectif de sorties de transactions qui ont été dépensées par une transaction respective présente dans un bloc respectif de la chaîne de blocs.

4. Procédé selon la revendication 3, dans lequel la première pluralité de sorties de transactions dépensées comprend de multiples ensembles respectifs de sorties de transactions, où chaque ensemble de sorties de transactions a été dépensé par une transaction respective présente dans un bloc respectif parmi plusieurs blocs de la chaîne de blocs.

5. Procédé selon l'une quelconque des revendications précédentes, dans lequel le filtre probabiliste est un filtre Bloom ou un filtre Cuckoo.

6. Procédé selon l'une quelconque des revendications précédentes, dans lequel chaque identifiant respectif est basé sur un identifiant respectif d'une transaction respective comprenant la sortie de transaction dépensée respective.

7. Procédé selon la revendication 6, dans lequel chaque identifiant respectif est en outre basé sur un indice de sortie respectif de la sortie de transaction dépensée respective dans la transaction respective.

8. Procédé selon l'une quelconque des revendications précédentes, comprenant les étapes suivantes :

   générer un deuxième filtre probabiliste, le deuxième filtre probabiliste comprenant un identifiant respectif de chacune d'une deuxième pluralité de sorties de transaction de chaîne de blocs dépensées disponibles pour l'entité émettrice (501) ; et
   mettre à disposition le deuxième filtre probabiliste pour une entité réceptrice (502).

9. Procédé selon la revendication 8, dans lequel la génération du deuxième filtre probabiliste comprend la mise à jour du premier filtre probabiliste pour inclure un identifiant respectif d'une ou plusieurs sorties de la deuxième pluralité de sorties de transactions de chaîne de blocs dépensées qui ne sont pas déjà incluses dans la première pluralité de sorties de transactions de chaîne de blocs dépensées.

10. Procédé selon l'une quelconque des revendications précédentes, comprenant les étapes suivantes :

    recevoir une notification indiquant que l'entité réceptrice (502) a reçu une sortie de transaction de chaîne de blocs que le premier ou le deuxième filtre probabiliste indique être une tentative de double dépense ; et
    déterminer si la sortie de transaction de chaîne de blocs est présente dans la première ou la deuxième pluralité de sorties de transactions de chaîne de blocs dépensées disponibles pour l'entité émettrice (502).

11. Procédé selon la revendication 10, comprenant d'informer l'entité réceptrice que la transaction de chaîne de blocs n'est pas une tentative de double dépense si la sortie de transaction de chaîne de blocs est déterminée comme n'étant pas présente dans la première ou la deuxième pluralité de sorties de transactions de chaîne de blocs dépensées disponibles pour l'entité émettrice (501).

12. Procédé selon la revendication 10, comprenant d'informer l'entité réceptrice et/ou une entité différente que la transaction de chaîne de blocs est une tentative de double dépense si la sortie de transaction de chaîne de blocs est déterminée comme étant présente dans la première ou la deuxième pluralité de sorties de transaction de chaîne de blocs dépensées disponibles pour l'entité émettrice.

13. Procédé mis en œuvre par ordinateur pour identifier une tentative de double dépense d'une sortie de transaction de chaîne de blocs, le procédé étant exécuté par une entité réceptrice (502) et comprenant les étapes suivantes :

    obtenir un premier filtre probabiliste à partir d'une entité émettrice (501), le premier filtre probabiliste codant un identifiant respectif de chacune d'une première pluralité de sorties de transactions de chaîne de blocs dépensées disponibles pour l'entité émettrice (501) ;
    obtenir une indication d'une ou plusieurs sorties de transactions de chaîne de blocs ; et
    déterminer si une ou plusieurs sorties de transactions de chaîne de blocs sont des tentatives de double dépense en fonction de la présence d'un identifiant respectif des une ou plusieurs sorties de transactions de chaîne de blocs dans le premier filtre probabiliste.

14. Équipement informatique comprenant :

    une mémoire comprenant une ou plusieurs unités de mémoire ; et
    un appareil de traitement comprenant une ou plusieurs unités de traitement, la mémoire stockant un code agencé pour être exécuté sur l'appareil de traitement, le code étant configuré afin, lorsqu'il est sur l'appareil de traitement, d'exécuter le procédé selon l'une quelconque des revendications 1 à 13.

15. Programme d'ordinateur incorporé sur un stockage lisible par ordinateur et configuré afin, lorsqu'il est exécuté sur un équipement ordinateur, d'exécuter le procédé selon l'une quelconque des revendications 1 à 13.

# Figure 1

# Figure 2

152i

202    $Tx_0$    201

| $TxID_0$ | |
|---|---|
| Input(s) | Output(s) |
| <u>Input</u><br>• Pointer to previous $Tx$<br>• Index of UTXO in previous $Tx$<br>• Unlocking script for unlocking from previous party | <u>$UTXO_0$</u><br>• Amount<br>• Locking script locking to Alice |
| ⋮<br>Optional further inputs<br>⋮ | Optional further $UTXO$s<br>⋮ |

203

152j

$Tx_1$    201    203

| $TxID_1$ | |
|---|---|
| Input(s) | Output(s) |
| <u>Input</u><br>• Pointer to $Tx_0$<br>• Index of $UTXO_0$ [within $Tx_0$]<br>• Unlocking script for unlocking $UTXO_0$ from Alice | <u>$UTXO_1$</u><br>• Amount<br>• Locking script locking to Bob |
| ⋮<br>Optional further inputs<br>⋮ | Optional further $UTXO$s<br>⋮ |

202

Transaction
from Alice to Bob

↓

Validated by running: Alice's locking script (from output of $Tx_0$), together with Alice's unlocking script (as input to $Tx_1$). This checks that Bob's unlocking script in $Tx_1$ meets the condition(s) defined in Alice's locking script in $Tx_0$.

# Figure 3

Tx1 spending
UTXO1

104M

Transmitting
Tx1

Node A  →  Node B        Node C

Accept
UTXO1?        No

Accept
UTXO1?        No

Accept
UTXO1?        Yes

Light
Client 1

Light
Client 2

Light
Client 3

105

Tx2 double-
spending
UTXO1

# Figure 4

Block *n*-2

Block *n*-2

Block *n*-2

Block *n*-1 (a) containing UTXO1

Block *n*-1 (a) containing UTXO1

Block *n*-1 (b) NOT containing UTXO1

Tx1 spending UTXO1, inserted in Block *n*-1 (a)

Block *n* (a)

Block *n* (a)

Block *n* (b) NOT containing UTXO1

104M

Node A

Node B

Node C

Accept UTXO1?

No

Accept UTXO1?

No

Accept UTXO1?

105

Light Client 1

Light Client 2

Light Client 3

Tx2 double-spending UTXO1

# Figure 5

500

503

502

User

Tx1

Receiving entity

Services

Filter request

Transmitting entity

Filter

Notifying possible double-spend

501

# Figure 6

Tx1 spending
UTXO1

104M

Transmitting
Tx1

Node A  →  Node B      Node C

Filters
last *x* blocks

Filters
last *x* blocks

Filters
last *x* blocks

Accept
UTXO1?
NO

Accept
UTXO1?
NO

Accept
UTXO1?
NO

Light
Client 1

Light
Client 2

Light
Client 3

105

Tx2 double-
spending
UTXO1

# Figure 7

Transaction A
Vin: [UTXO1,
UTXO2]
Vout: [New outputs]

Valid?

Yes

No

Rejected

Transaction A

Mempool

UTXO1 ID

UTXO2 ID

Filter *n*

# Figure 8

Block *n-x* → ⋯ → Block *n*-1 → Block *n* → Block *n*+1

Filter *n-x*    Filter *n-1*    Filter *n*    Filter *n*+1

# Figure 9

```
   Node A              Node B              Node C

  Filters             Filters             Filters
 last x blocks       last x blocks       last x blocks

                  Local server with
                  probabilistic filter

   Accept            Accept            Accept
   UTXOs?            UTXOs?            UTXOs?

   PoS 1             PoS 2             PoS 3
```

# Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019160128 A1

- JP 2019146137 A